# EUROPEAN PATENT APPLICATION

(11) **EP 4 525 179 A1**
(43) Date of publication of application: **19.03.2025**
(21) Application number: 23803729.5
(22) Date of filing: 26.04.2023
(51) Int. Cl.: H01M 50/449, H01M 50/446, H01M 50/411, H01M 50/431, H01M 50/443, H01M 50/457, H01M 4/525, H01M 10/0525, C08F 212/00, C08F 220/18

(54) **SEPARATOR FOR RECHARGEABLE LITHIUM BATTERY AND RECHARGEABLE LITHIUM BATTERY COMPRISING SAME**

(30) Priority: 10.05.2022 KR 20220057431
(71) Applicant: SAMSUNG SDI CO., LTD., Giheung-gu Yongin-si, Gyeonggi-do 17084 (KR)
(72) Inventor: PARK, Sam-Jin, Yongin-si, Gyeonggi-do 17084 (KR); LEE, Minjeong, Yongin-si, Gyeonggi-do 17084 (KR); SEO, Jinweon, Yongin-si, Gyeonggi-do 17084 (KR); LEE, Eonmi, Yongin-si, Gyeonggi-do 17084 (KR); KO, Changhong, Yongin-si, Gyeonggi-do 17084 (KR)
(74) Representative: Gulde & Partner
(86) International application number: PCT/KR2023/005706
(87) International publication number: WO 2023/219306

(57) **Abstract**

Disclosed are a separator for a rechargeable lithium battery, and a rechargeable lithium battery including the same, the separator for a rechargeable lithium battery including a porous substrate; a heat resistant layer on at least one surface of the porous substrate; and an adhesive layer on the heat resistant layer, wherein the heat resistant layer includes a first binder and inorganic particles, the first binder includes at least one selected from polyacrylate, polyacrylic acid, polyacrylonitrile, polyvinyl alcohol, polysulfonic acid, polyacrylamide, polyamide, polyurea, polyurethane, and a copolymer thereof, the adhesive layer includes a second binder, the second binder includes a copolymer including a first unit derived from a vinyl aromatic monomer, a second unit derived from an alkyl acrylate, and a third unit derived from a phosphonate-based monomer.

## Description

### [Technical Field]

A separator for a rechargeable lithium battery and a rechargeable lithium battery including the same are disclosed.

### [Background Art]

A separator for an electrochemical battery is an intermediate film that separates a positive electrode and a negative electrode in a battery, and maintains ionic conductivity continuously to enable charge and discharge of a battery. However, when the battery is exposed to a high temperature environment due to abnormal behavior, it generates heat and starts thermal runaway. Therefore, the separator should be able to suppress the ignition of the battery with a shutdown function, which is a function of blocking pores by melting the heat-fusible resin and the safety of the battery should be ensured by maintaining its shape without shrinking even at high temperatures.

Recently, there has been a demand for higher capacity and higher output of batteries, and there is a trend to apply high nickel-based positive electrode materials with a nickel content of 80 mol% or more or to manufacture them with a stacked cell structure that is easy to realize capacity. In addition to high capacity and high output, there is a trend toward requiring battery safety that suppresses battery temperature rise and ignition even at high temperatures.

For example, when using a high-nickel positive electrode material, a large amount of gas can be generated under high temperature conditions, which can lead to problems with capacity dropping or heat generation during the cycle, making it more necessary to ensure battery safety. In particular, when gas is generated in the battery, the gas is located between the separator and the electrode plate interface and lithium salt is precipitated, which may cause the pores of the separator to be blocked or short-circuited. Accordingly, the separator is required to have ultra-high heat resistance and high adhesive force to the electrode plate.

### [Disclosure]

### [Technical Problem]

Provided is a separator for a rechargeable lithium battery which has improved heat resistance and the adhesive force between the separator and the electrode plate, and thus maintains the shape of the separator even at high temperatures, and suppresses lithium salt precipitation at the interface, providing a separator for a rechargeable lithium battery with improved safety and reliability of the battery, and provided a separator for a rechargeable lithium battery which exhibits excellent adhesive force even at low temperature/low pressure and can be used for battery types that cannot be applied to high temperature/high pressure processes.

### [Technical Solution]

In an embodiment, a separator for a rechargeable lithium battery includes a porous substrate; a heat resistant layer on at least one surface of the porous substrate; and an adhesive layer on the heat resistant layer, wherein the heat resistant layer includes a first binder and inorganic particles, the first binder includes at least one selected from polyacrylate, polyacrylic acid, polyacrylonitrile, polyvinyl alcohol, polysulfonic acid, polyacrylamide, polyamide, polyurea, polyurethane, and a copolymer thereof, the adhesive layer includes a second binder, the second binder includes a copolymer including a first unit derived from a vinyl aromatic monomer, a second unit derived from an alkyl acrylate, and a third unit derived from a phosphonate-based monomer.

In another embodiment, a rechargeable lithium battery includes a positive electrode, a negative electrode, the aforementioned separator between the positive electrode and the negative electrode, and an electrolyte.

### [Advantageous Effects]

According to an embodiment, a separator for a rechargeable lithium battery implements ultra-high heat resistance while improving adhesive force to the electrode plate, maintaining a shape of the separator even at high temperatures, and suppressing lithium salt precipitation at the interface, thereby ensuring the safety and reliability of the battery, and also exhibits excellent adhesive force even at low temperature/low pressure and thus can be used for battery types that cannot be applied to high temperature/high pressure processes. Rechargeable lithium batteries using such a separator can have improved processability, high-temperature cycle-life characteristics, safety, and reliability.

### [Description of the Drawings]

FIG. 1 is a cross-sectional view schematically showing a rechargeable lithium battery.
FIG. 2 is a graph showing the change in temperature within the battery of Comparative Example 1 during its high-temperature cycle-life.
FIG. 3 is a graph showing the change in temperature within the battery of Example 1 during its high-temperature cycle-life.
FIG. 4 is a graph showing the charge/discharge efficiency of the battery cell of Comparative Example 1.
FIG. 5 is a graph showing the charge/discharge efficiency of the battery cell of Example 1.

### [Best Mode]

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter and the average size may be measured by a method well known to those skilled in the art, for example, may be measured by a particle size analyzer, or may be measured by a transmission electron microscope photograph or a scanning electron microscope photograph. Alternatively, it is possible to obtain an average particle diameter value by measuring a size using a dynamic light scattering method, performing data analysis, counting the number of particles for each particle size range, and calculating from this. As used herein, when a definition is not otherwise provided, the average particle diameter may be may mean a diameter (D50) of particles measured by a particle size analyzer and having a cumulative volume of 50 volume% in the particle size distribution.

Herein, "or" is not to be construed as an exclusive meaning, for example, "A or B" is construed to include A, B, A+B, and the like.

### Separator

In an embodiment, a separator for a rechargeable lithium battery is provided, including a porous substrate, a heat resistant layer on at least one surface of the porous substrate, and an adhesive layer on the heat resistant layer. The heat resistant layer and the adhesive layer may be located on one surface or both surfaces of the porous substrate. This separator may be referred to as a coated separator.

The heat resistant layer includes a first binder and inorganic particles. The first binder includes at least one selected from polyacrylate, polyacrylic acid, polyacrylonitrile, polyvinyl alcohol, polysulfonic acid, polyacrylamide, polyamide, polyurea, polyurethane, and a copolymer thereof. The adhesive layer includes a second binder, the second binder includes a copolymer including a first unit derived from a vinyl aromatic monomer, a second unit derived from an alkyl acrylate, and a third unit derived from a phosphonate-based monomer.

The separator can achieve ultra-high heat resistance by including the heat resistant layer and for example, the separator can satisfy a 150 °C dry shrinkage rate of less than 5% and a 150°C wet shrinkage rate of less than 15%. Accordingly, the separator maintains its shape even under high temperature conditions and does not deteriorate performance, thereby improving the cycle-life characteristics and safety of the battery.

In addition, by including the adhesive layer, the separator can achieve excellent adhesive force even at low temperature and pressure, and can demonstrate stable and strong adhesive force between the separator and the electrode plate. The adhesive layer applied to most separators exhibits adhesive force under high temperature and high pressure conditions while impregnated with an electrolyte solution, and the adhesive force of the separator-negative electrode is generally lower than that of the separator-positive electrode. On the other hand, the adhesive layer according to an embodiment realizes an adhesive force even at temperatures within the battery manufacturing process, for example, 10 °C to 50 °C, and adhesive force is achieved even at very low pressure due to changes in thickness due to charging and discharging of the battery, and it can also be applied to battery types that are difficult to apply high temperature and high pressure processes. In addition, by including the adhesive layer, the separator can achieve an adhesive strength of 0.1 gf/mm or more under low temperature and low pressure conditions for both the separator-positive electrode and the separator-negative electrode. Accordingly, the long-term cycle-life characteristics and safety of the battery can be improved.

For example, in a high-capacity battery using a high-nickel-based positive electrode active material, a lot of gas is generated within the battery during operation. However, if there is no or low adhesive force between the separator and the electrode plate, lithium salt may be precipitated at the interface, causing a sudden drop in capacity or heat generation. On the other hand, the separator according to an embodiment has very excellent adhesive force between the positive electrode and the negative electrode, and can suppress lithium salt precipitation at the interface, thereby improving the cycle-life characteristics of the battery and effectively improving safety problems such as ignition and thermal runaway.

### Porous Substrate

The polyolefin used as a porous substrate material in the separator may be, for example, a homopolymer such as polyethylene or polypropylene, a copolymer, or a mixture thereof. The polyethylene may be low-density, medium-density, or high-density polyethylene, and high-density polyethylene may be used from the viewpoint of mechanical strength. Additionally, two or more types of polyethylene can be mixed for the purpose of providing flexibility. From the viewpoint of achieving both mechanical strength and high permeability, the weight average molecular weight of polyethylene may be 100,000 to 12,000,000, for example, 200,000 to 3,000,000. The polypropylene can be a homopolymer, random copolymer, or block copolymer, and can be used alone or in a mixture of two or more. Also, stereoregularity is not particularly limited and isotactic, syndiotactic or atactic can be used, but inexpensive isotactic polypropylene can be used. Additionally, additives such as polyolefins other than polyethylene or polypropylene and antioxidants can be added to polyolefin.

The porous substrate may include, for example, polyolefin such as polyethylene or polypropylene, and a multilayer film of two or more layers, such as polyethylene/polypropylene two-layer separator, polyethylene/polypropylene/polyethylene three-layer separator, polypropylene/polyethylene/polypropylene three-layer separator, but it is not limited thereto, and any material and configuration that can be used as a porous substrate in the art may be possible.

The porous substrate may include, for example, a diene-based polymer prepared by polymerizing a monomer composition including a diene-based monomer. The diene-based monomer may be a conjugated diene-based monomer or a non-conjugated diene-based monomer. For example, the diene monomer may include one or more selected from 1,3-butadiene, isoprene, 2-chloro-1,3-butadiene, 2,3-dimethyl-1,3-butadiene, 2-ethyl-1,3-butadiene, 1,3-pentadiene, chloroprene, vinylpyridine, vinylnorbornene, dicyclopentadiene, and 1,4-hexadiene.

The thickness of the porous substrate may be 1 µm to 100 µm, for example, 1 µm to 30 µm, 5 µm to 20 µm, 5 µm to 15 µm, or 5 µm to 10 µm. If the thickness of the porous substrate is less than 1 µm, it may be difficult to maintain the mechanical properties of the separator, and if the thickness of the porous substrate is more than 100 µm, the internal resistance of the lithium battery may increase.

A porosity of the porous substrate may be 5% to 95%. **If** the porosity of the porous substrate is less than 5%, the internal resistance of the lithium battery may increase, and if the porosity is more than 95%, it may be difficult to maintain the mechanical properties of the porous substrate.

A pore size of the porous substrate may be 0.01 µm to 50 µm, for example, 0.01 µm to 20 µm, or 0.01 µm to 10 µm. If the pore size of the porous substrate is less than 0.01 µm, the internal resistance of the lithium battery may increase, and if the pore size of the porous substrate is greater than 50 µm, it may be difficult to maintain the mechanical properties of the porous substrate.

### Heat Resistant Layer

### First Binder

The first binder includes at least one selected from polyacrylate, polyacrylic acid, polyacrylonitrile, polyvinyl alcohol, polysulfonic acid, polyacrylamide, polyamide, polyurea, polyurethane, and a copolymer thereof. This first binder can be applied to the heat resistant layer together with inorganic particles to provide high heat resistance to the separator.

Herein, the acrylic has a concept that includes methacrylic and acrylic, and polysulfonic acid is a polymer derived from a monomer including a sulfonic acid group, such as polyacrylsulfonic acid, polyacrylamidosulfonic acid, polyvinylsulfonic acid, polyallylsulfonic acid, polystyrenesulfonic acid, polyanetholsulfonic acid, etc.

The first binder may include, for example, a homopolymer or copolymer of polyacrylamide, or a copolymer of polyacrylamide and polysulfonic acid.

For example, the first binder may include a copolymer including a first unit derived from (meth)acrylamide, a second unit derived from a sulfonic acid group-containing monomer, and a third unit derived from (meth)acrylic acid, (meth)acrylate, a nitrile group-containing monomer, and an alcohol group-containing monomer, or a combination thereof. This first binder can provide ultra-high heat resistance to the separator. Herein, the unit can be expressed as a repeating unit or structural unit.

The first unit derived from (meth)acrylamide can improve the adhesion characteristics with the porous substrate through the acrylamide functional group, and forms a hydrogen bond with the -OH functional group of the inorganic particles, and thus inorganic particles in the heat resistant layer can be more firmly fixed, thereby enhancing the heat resistance of the separator.

The second unit derived from the sulfonic acid group-containing monomer contains a bulky functional group, thereby reducing the mobility of the copolymer and enhancing the heat resistance of the separator. Herein, sulfonic acid may include a sulfonate salt. The sulfonate salt is a salt composed of sulfonic acid and an appropriate cation, and the cation may be, for example, an alkali metal ion. That is, the sulfonate salt may be an alkali metal sulfonate salt.

The sulfonic acid group-containing monomer may include, for example, (meth)acrylsulfonic acid, (meth)acrylalkylsulfonic acid, (meth)acrylamidosulfonic acid, (meth)acrylamidoalkylsulfonic acid, vinylsulfonic acid, allylsulfonic acid, styrenesulfonic acid, anetholsulfonic acid, or a salt thereof. Herein, the alkyl may be C1 to C20 alkyl, C1 to C10 alkyl, or C1 to C6 alkyl.

The (meth)acrylalkylsulfonic acid may be, for example, 2-sulfoethyl(meth)acrylate, 3-sulfopropyl(meth)acrylate, etc., and the (meth)acrylamidoalkylsulfonic acid may be, for example, 2-acrylamido-2-methylpropanesulfonic acid.

The third unit derived from (meth)acrylic acid, (meth)acrylate, a nitrile group-containing monomer, an alcohol group-containing monomer, or a combination thereof serves to fix the inorganic particles on the porous substrate, and at the same time, can provide adhesive force so that the heat resistant layer can adhere well to the porous substrate, and can contribute to improving the heat resistance and air permeability of the separator. In addition, the dispersibility of the heat resistant layer composition can be improved through an acrylic group or an alcohol group, and the oxidation resistance of the separator can be increased and the moisture content reduced through a nitrile group.

The (meth)acrylates may include, for example, methyl acrylate, ethyl(meth) acrylate, propyl(meth)acrylate, butyl(meth)acrylate, hexyl(meth)acrylate, 2-ethylhexyl(meth)acrylate, octyl(meth)acrylate, isodecyl(meth)acrylate, lauryl(meth)acrylate, tridecyl(meth)acrylate, stearyl(meth)acrylate, cyclohexyl(meth)acrylate, 2-(perfluorobutyl)ethyl(meth)acrylate, 2-(perfluoropentyl)ethyl(meth)acrylate, 2-(perfluorohexyl)ethyl(meth)acrylate, 2-(perfluorooctyl)ethyl(meth)acrylate, 2-(perfluorononyl)ethyl(meth)acrylate, 2-(perfluorodecyl)ethyl(meth)acrylate, or a combination thereof.

The nitrile group-containing monomer may be, for example, acrylonitrile, cyanoalkyl (meth)acrylate, or a combination thereof. Herein, the alkyl may be C1 to C20 alkyl, C1 to C10 alkyl, or C1 to C6 alkyl. The cyanoalkyl (meth)acrylate may be, for example, cyanomethyl(meth)acrylate, cyanoethyl(meth)acrylate, cyanopropyl(meth)acrylate, or cyanooctyl(meth)acrylate.

The alcohol group-containing monomer may be, for example, vinyl alcohol or olefin alcohol. The olefin alcohol may be, for example, 2-methyl-3-buten-1-ol, 2-ethyl-3-buten-1-ol, 1,1-diphenyl-3-buten-1-ol, 2-methyl-3-buten-2-ol, 2,2-dimethyl-3-buten-1-ol, 3-methyl-1-penten-3-ol, 2,4-dimethyl-4-penten-2-ol, 4-alkenyl-2-pentanol, 4-methyl-4-penten-2-ol, 2-methyl-4-penten-2-ol, 2-phenyl-4-penten-2-ol, 2-allyl hexamethylene fluoroisopropanol, 2-hydroxyl-5-hexene, 3-buten-2-ol, 3-methyl-5-hexen-3-ol, 2-methyl-2-hydroxyl-5-hexene, 1-allylcyclo hexanol, 2,3-dimethyl-2-hydroxyl-5-hexene, 1-heptylene-4-ol, etc.

In the first binder, the copolymer may include, for example, 55 mol% to 99 mol% of the first unit, 0.5 mol% to 40 mol% of the second unit, and 0.5 mol% to 40 mol% of the third unit. Alternatively, in the first binder, the copolymer may include 75 mol% to 94 mol% of the first unit, 1 mol% to 10 mol% of the second unit, and 5 mol% to 15 mol% of the third unit. Herein, the amount range of each unit is based on 100 mol% of the copolymer. When the copolymer includes each unit in this ranges, the first binder can be very strongly bonded to the inorganic particles in the heat resistant layer, can strongly adhere the heat resistant layer and the porous substrate, and by enabling the heat resistant layer composition to have appropriate viscosity and dispersibility, it is possible to ultimately improve the heat resistance, chemical resistance, adhesive force, and processability of the separator.

In the first binder, the copolymer may further include other units in addition to the first to third units described above. For example, the copolymer may further include a diene-based unit, a styrene-based unit, an ester-based unit, a carbonate-based unit, etc.

Additionally, the copolymer in the first binder may be in various forms, such as an alternating polymer in which the units are distributed alternately, a random polymer in which the units are randomly distributed, or a graft polymer in which some structural units are grafted.

A weight average molecular weight of the copolymer of the first binder may be 300,000 to 970,000, for example, 350,000 to 970,000, 450,000 to 970,000, or 450,000 to 700,000. In this case, the separator including the first binder in the heat resistant layer can exhibit excellent adhesive force, heat resistance, and air permeability. The weight average molecular weight may be the polystyrene-reduced average molecular weight measured using gel permeation chromatography.

The copolymer of the first binder can be prepared by various known methods such as emulsion polymerization, suspension polymerization, bulk polymerization, solution polymerization, or bulk polymerization.

The first binder may be included in an amount of 1 wt% to 20 wt%, for example 1 wt% to 15 wt%, 1 wt% to 10 wt%, or 1 wt% to 5 wt% based on 100 wt% of the heat resistant layer. When included within this range, the adhesive force and heat resistance of the heat resistant layer can be improved simultaneously.

### Inorganic Particles

The inorganic particles can reduce the possibility of a short circuit between the positive electrode and the negative electrode and prevent the separator from rapidly shrinking or deforming due to temperature rise. In other words, the heat resistant layer can improve the heat resistance and safety of the battery by including inorganic particles.

The inorganic particles may be a metal oxide, a semi-metal oxide, or a combination thereof. Specifically, the inorganic particles may include alumina, titania, boehmite, barium sulfate, calcium carbonate, calcium phosphate, amorphous silica, crystalline glass particles, kaolin, talc, silica-alumina composite oxide particles, calcium fluoride, lithium fluoride, zeolite, molybdenum sulfide, mica, magnesium oxide and the like.

The inorganic particle may be for example Al₂O₃, SiO₂, TiO₂, SnO₂, CeO₂, NiO, CaO, ZnO, MgO, ZrO₂, Y₂O₃, SrTiO₃, BaTiO₃, MgF₂, Mg(OH)₂, or a combination thereof. For example, the inorganic particles may be alumina, titania, boehmite, barium sulfate, or a combination thereof.

The inorganic particles may be spherical, plate-shaped, fibrous, etc., but are not limited to these and may be any form usable in the art. Examples of the plate-shaped inorganic particles include alumina and boehmite. The plate-shaped alumina, boehmite, etc. can improve the heat resistance of the separator, secure a relatively large number of pores, and improve the physical safety of the lithium battery.

When the inorganic particles are plate-shaped or fibrous, an aspect ratio of the inorganic particles may be 1:5 to 1:100, for example, 1:10 to 1:100, 1:5 to 1:50, or 1:10 to 1:50. Additionally, the ratio of the length of the major axis to the minor axis on the flat surface of the plate-shaped inorganic particle may be 1 to 3 or 1 to 2. The aspect ratio and the ratio of the length of the major axis to the minor axis may be measured using an optical microscope. When the aspect ratio and the length range of the minor axis to the major axis are satisfied, the thermal shrinkage rate of the separator can be lowered, relatively improved porosity can be secured, and the physical stability of the lithium battery can be improved.

An average particle diameter of the inorganic particles may be 0.1 µm to 2 µm, 0.1 µm to 1.5 µm, or 0.2 µm to 1.0 µm. The average particle diameter is measured using a laser scattering particle size distribution meter (e.g., Horiba LA-920), and refers to a median particle size (D50) when 50% is accumulated from the small particle side in volume conversion. By using inorganic particles having an average particle diameter within the above range, the binding force between the heat resistant layer and the porous substrate may be improved, an appropriate porosity of the separator can be secured, and the heat resistance and processability of the separator can be improved.

A weight ratio of the first binder and the inorganic particles in the heat-resistant layer may be 1:20 to 1:40, for example, 1:25 to 1:40, or 1:25 to 1:35. In this case, the heat resistant layer can achieve very high heat resistance and adhesive force. If the weight ratio of the first binder and the inorganic particles is less than 1:20, the porosity of the coating layer may be lowered due to the excess of the first binder, which may limit the movement of lithium ions, and the moisture absorption of the first binder may increase, leading to deterioration of battery characteristics. Additionally, if the weight ratio of the first binder and the inorganic particles exceeds 1:40, the heat resistance may be reduced due to the insufficient content of the binder to adhere the inorganic particles.

The inorganic particles may be included in an amount of 80 wt% to 99 wt%, for example 85 wt% to 99 wt%, 90 wt% to 99 wt%, or 95 wt% to 99 wt% based on 100 wt% of the heat resistant layer. When included in this range, the inorganic particles can achieve high mechanical rigidity and high transmittance of the heat resistant layer and the separator including it.

The heat resistant layer may further include other binders commonly used in the art in addition to the first binder, and may further include organic particles in addition to the inorganic particles described above.

A thickness of the heat resistant layer is not particularly limited, but may be 5 length% to 45 length%, or 10 length% to 30 length% of the thickness of the porous substrate, based on the thickness of the heat resistant layer formed on one surface of the porous substrate, and may be, for example, 0.1 µm to 5 µm, 0.5 µm to 4 µm, 0.5 µm to 3 µm, or 1 µm to 2 µm. In this case, the heat resistant layer can achieve excellent heat resistance and adhesive force without reducing the air permeability of the separator.

### Adhesive Layer

The adhesive layer is located on the aforementioned heat resistant layer. When the heat resistant layer is located on both surfaces of the porous substrate, the adhesive layer is also disposed on both surfaces, and when the heat resistant layer is located on only one surface of the porous substrate, the adhesive layer may be located only on one surface on which the heat resistant layer is formed, or on both surfaces, i.e. on the surface on which the heat resistant layer is formed and on the surface on which the heat resistant layer is not formed. The adhesive layer is located on the outermost surface of the separator and can function to improve the adhesive force between the electrode and the separator.

The adhesive layer according to an embodiment includes a second binder, and the second binder includes a copolymer including a first unit derived from a vinyl aromatic monomer, a second unit derived from an alkyl acrylate, and a third unit derived from a phosphonate-based monomer. Such a copolymer can exhibit excellent adhesive force even at low temperatures and low pressures, so that it can be used in battery types that are difficult to apply high temperature and high pressure processes, giving them an advantage in the process and even a very small amount can maximize the adhesive force between the separator and the electrode plate, improving the heat resistance and adhesive force of the separator and ultimately improving the processability, high-temperature cycle-life characteristics, safety, and reliability of the battery.

The first unit derived from the vinyl aromatic monomer can increase the adhesive force of the adhesive layer and improve the dispersibility and processability of the adhesive layer composition. For example, the first unit may be represented by Chemical Formula 1.

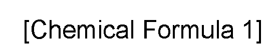

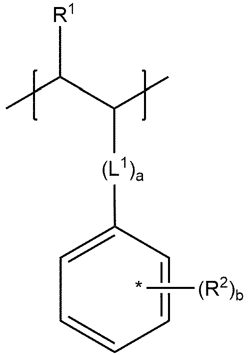

**In** Chemical Formula 1, R¹ is hydrogen, fluorine, a substituted or unsubstituted C1 to C6 alkyl group, or a substituted or unsubstituted C6 to C20 aryl group, L¹ is a substituted or unsubstituted C1 to C6 alkylene group, a substituted or unsubstituted C3 to C10 cycloalkylene group, a substituted or unsubstituted C6 to C20 arylene group, or a combination thereof, a is 0 or 1, * indicates a portion linked to the carbon of the benzene ring, R² is fluorine, a substituted or unsubstituted C1 to C6 alkyl group, a substituted or unsubstituted C6 to C20 aryl group, or a substituted or unsubstituted C1 to C6 alkenyl group, and b is an integer of 0 to 5.

For example, in Chemical Formula 1, R¹ may be hydrogen or a methyl group, R² may be fluorine, a methyl group, or an ethyl group, and b may be 0 or 1.

The vinyl aromatic monomer may be, for example, styrene, α-methylstyrene, fluorostyrene, vinyltoluene, divinylbenzene, 1,1-diphenylethylene, or a combination thereof.

The second unit derived from the alkyl acrylate can contribute to improving the adhesive force of the adhesive layer and implementing appropriate air permeability and heat resistance. Herein, alkyl may be alkyl having 1 to 20 carbon atoms, that is, C1 to C20 alkyl, and the acrylate includes methacrylate and acrylate. For example, the second unit may be represented by Chemical Formula 2.

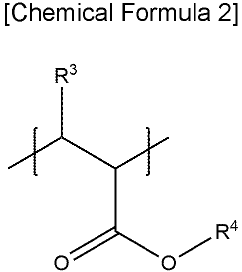

In Chemical Formula 2, R³ is hydrogen, fluorine, a substituted or unsubstituted C1 to C6 alkyl group, or a substituted or unsubstituted C6 to C20 aryl group, and R⁴ is a C1 to C20 alkyl group.

In Chemical Formula 2, R⁴ may be, for example, a C5 to C18 alkyl group, or a C6 to C15 alkyl group. In this case, the second binder can achieve appropriate air permeability and heat resistance while exhibiting excellent adhesive force under low temperature and low pressure conditions.

The third unit derived from the phsophonate-based monomer allows the second binder to achieve excellent adhesive force under low temperature and low pressure conditions, and can contribute to the second binder having an appropriate glass transition temperature and swelling degree, and even with a very small amount of binder, excellent adhesive force can be achieved and high heat resistance and air permeability can be achieved.

The phosphonate-based monomer refers to a monomer including a phosphonate group and a C=C double bond. The phosphonate group can be represented by -P(=O)(OR)(OR'), wherein R and R' are an organic group other than hydrogen. The third unit may be represented, for example, by Chemical Formula 3.

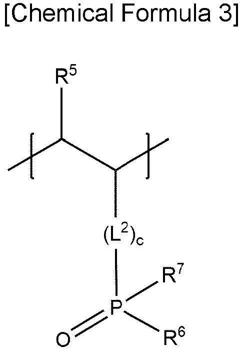

In Chemical Formula 3, R⁵ is hydrogen, fluorine, a substituted or unsubstituted C1 to C6 alkyl group, or a substituted or unsubstituted C6 to C20 aryl group, L² is a carboxyl group (-C(=O)O-), a carbonyl group (-C(=O)-), an ether group (-O-), a substituted or unsubstituted C1 to C6 alkylene group, a substituted or unsubstituted C3 to C10 cycloalkylene group, a substituted or unsubstituted C6 to C20 arylene group, or a combination thereof, c is 0 or 1, R⁶ and R⁷ are the same or different from each other and are each independently a substituted or unsubstituted C1 to C10 alkyl group, or a substituted or unsubstituted C6 to C20 aryl group.

As an example, in Chemical Formula 3, R⁵ may be hydrogen or a methyl group, L² may be a carboxyl group, a substituted or unsubstituted C1 to C6 alkylene group, or a combination thereof, and R⁶ and R⁷ may independently be a C1 to C6 alkyl group.

The phosphonate-based monomer may be acryl phosphonate, for example, and in this case, the second binder can achieve excellent adhesive force under low temperature and low pressure conditions even in a small amount and can exhibit excellent processability.

The third unit may be, for example, derived from an acryl phosphonate-based monomer and may be represented by Chemical Formula 4.

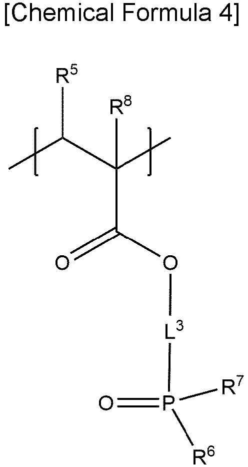

In Chemical Formula 4, R⁵ is hydrogen, fluorine, a substituted or unsubstituted C1 to C6 alkyl group, or a substituted or unsubstituted C6 to C20 aryl group, L³ is a substituted or unsubstituted C1 to C6 alkylene group, R⁶ and R⁷ are the same or different from each other and are each independently a substituted or unsubstituted C1 to C10 alkyl group, or a substituted or unsubstituted C6 to C20 aryl group, and R⁸ is hydrogen or a methyl group.

As an example, the phsophonate-based monomer may be dimethyl[(acryloyloxy)methyl]phsophonate, dimethyl[(acryloyloxy)ethyl]phsophonate, diethyl[(acryloyloxy)methyl]phsophonate, or diethyl[(acryloyloxy)ethyl]phsophonate, wherein acryl may be replaced by methacryl. If including the third unit derived from such a monomer, the second binder can achieve excellent adhesive force under low temperature and low pressure conditions even in a small amount and can exhibit excellent processability.

In the second binder, the copolymer may include 40 wt% to 80 wt% of the first unit, 5 wt% to 40 wt% of the second unit, and 0.1 wt% to 20 wt% of the third unit. For example, the copolymer of the second binder may include 50 wt% to 70 wt% of the first unit, 10 wt% to 30 wt% of the second units, and 5 wt% to 20 wt% of the third units. The amount range of each unit is based on 100 wt% of the copolymer. If each unit satisfies these amount ranges, the second binder can achieve excellent adhesive force even in small amounts under low temperature and low pressure conditions without deteriorating the heat resistance and air permeability of the separator, thereby improving processability, cycle-life characteristics, and safety.

The second binder may be in a form of particles and may maintain the particle form without dissolving in an aqueous solvent. **In** this case, an average particle diameter (D50) of the second binder may be 0.1 µm to 1 µm, for example 0.2 µm to 0.9 µm, 0.2 µm to 0.8 µm, or 0.2 µm to 0.7 µm. When this particle diameter range is satisfied, the adhesive layer can achieve excellent low-temperature and low-pressure adhesive force even at a thin thickness without deteriorating the heat resistance and air permeability of the separator. Herein the average particle diameter may be may mean a diameter (D50) of particles measured by a particle size analyzer and having a cumulative volume of 50 volume% in the particle size distribution.

For example, the second binder may be in a form of particles with a core-shell structure, in which case it is advantageous to secure an appropriate average particle diameter and swelling degree. When the second binder has a core-shell structure, the shell may be made of a copolymer containing the aforementioned first unit, second unit, and third unit. The material of the core is not particularly limited and may be, for example, an acrylic polymer, a diene polymer, or a copolymer thereof.

A glass transition temperature of the second binder may be 60 °C to 90 °C, for example, 65 °C to 75 °C. When the second binder has a glass transition temperature in this range, it is advantageous to achieve adhesive force under low temperature and low pressure conditions and can exhibit excellent adhesive force even in a small amount without deteriorating the characteristics of the separator.

The swelling degree of the second binder of the adhesive layer may be 600% to 1000%, for example, 700% to 900%. If the second binder has a swelling degree in this range, excellent adhesive force can be maintained during the battery manufacturing process and operation, and the adhesive force between the separator and the negative electrode as well as the separator and the positive electrode can be improved. Herein, the swelling degree may mean a swelling degree after the second binder is left in the electrolyte solution at 60 °C for 72 hours.

A thickness of the adhesive layer is not particularly limited, but may be 1 length% to 15 length%, or 1 length% to 10 length% of the thickness of the porous substrate, based on the thickness of the adhesive layer formed on one surface of the porous substrate, and may be, for example, 0.05 µ m to 3 µm, or 0.1 µm to 2 µm. The adhesive layer according to an embodiment has such a thin thickness that it does not deteriorate the performance of the separator and can exhibit excellent adhesive force despite the thin thickness.

In an embodiment, provided is a method of manufacturing a separator for a rechargeable lithium battery that includes preparing a porous substrate, coating a heat resistant layer composition including a first binder, inorganic particles, and a solvent on at least one surface of the porous substrate, coating an adhesive layer composition including a second binder and a solvent on the heat resistant layer and then drying it.

At this time, a loading amount of the adhesive layer composition may be, for example, 0.05 g/m² to 0.2 g/m², or 0.1 g/m² to 0.2 g/m². In this case, the adhesive layer can achieve excellent adhesive force without deteriorating the characteristics of the separator.

In the method of manufacturing the separator, the solvent of the heat resistant layer composition and the solvent of the adhesive layer composition may be an aqueous solvent, and may each be independently selected from water, an alcohol-based solvent, and a combination thereof. The alcohol-based solvent may be, for example, methanol, ethanol, propanol, butanol, or a combination thereof. These aqueous solvents are harmless to the body and have excellent drying properties, allowing mass production to be achieved without reducing productivity.

A separator according to an embodiment can implement ultra-high heat resistance characteristics. For example, the dry shrinkage rate of the separator may be less than or equal to 5%, and the shrinkage rate in both the horizontal and vertical directions may be less than or equal to 4%, or less than or equal to 3%. Herein, the dry shrinkage rate refers to the degree of shrinkage of the separator after leaving it at 150 °C for 1 hour.

Additionally, the separator according to an embodiment can achieve excellent adhesive force. For example, the wet adhesive force of the separator may be greater than or equal to 0.10 gf/mm, greater than or equal to 0.15 gf/mm, or greater than or equal to 0.20 gf/mm. In general, the adhesive force between the separator and the negative electrode tends to be lower than that of the separator and the positive electrode, but the separator according to an embodiment can also achieve an adhesive force with the negative electrode of greater than or equal to 0.10 gf/mm. Herein, the wet adhesive force may refer to a peeling force between the separator and the electrode measured after injecting the electrolyte solution into the battery case and leaving it for 2 hours at 40 °C and 50 kg.

In the separator, the heat resistant layer and the adhesive layer may each independently have a single-layer structure or a multilayered structure. In a multilayered structure, layers selected from organic layers, inorganic layers, and organic/inorganic layers may be arbitrarily arranged. The multilayered structure may be a two-layer structure, a three-layer structure, or a four-layer structure, but is not necessarily limited to these structures and may be selected depending on the required composite separator characteristics.

Meanwhile, when the heat resistant layer and the adhesive layer are located on both surfaces of the porous substrate, an amount of the second binder in the adhesive layer on the negative electrode side in contact with the negative electrode may be greater than or equal to an amount of the second binder in the adhesive layer on the positive electrode side in contact with the positive electrode. For example, the amount of the second binder of the negative electrode side adhesive layer may be 1.5 times or more, for example, 2 to 5 times, or 2 to 4 times the amount of the second binder of the positive electrode side adhesive layer. In this case, by improving the problem that the adhesive force of the separator-negative electrode is generally lower than that of the separator-positive electrode, the loss or deterioration of the adhesive force of the separator-negative electrode interface due to repeated charging and discharging is suppressed, preventing lithium salt precipitation, and improving the safety of the battery.

### Rechargeable Lithium Battery

In an embodiment, a rechargeable lithium battery including a positive electrode, a negative electrode, the aforementioned separator between the positive electrode and the negative electrode, and an electrolyte.

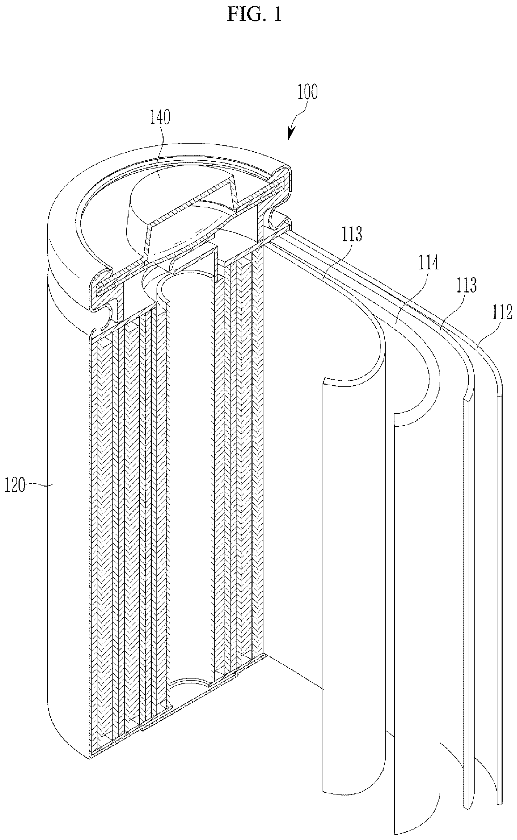

FIG. 1 is a schematic view illustrating a rechargeable lithium battery according to an embodiment. Referring to FIG. 1, the rechargeable lithium battery 100 according to an embodiment includes a battery cell including positive electrode 114, a negative electrode 112 facing the positive electrode 114, a separator 113 between the positive electrode 114 and the negative electrode 112, and a electrolyte impregnating the positive electrode 114, the negative electrode 112, and the separator 113, a battery container 120 housing the battery cell, and a sealing member 140 that seals the battery container 120.

### Positive Electrode

The positive electrode 114 includes a current collector and a positive electrode active material layer on the current collector and the positive electrode active material layer includes a positive electrode active material and may optionally include a binder and/or a conductive material. Herein, the current collector may be, for example, aluminum foil, but is not limited thereto.

The positive electrode active material may include lithiated intercalation compounds that reversibly intercalate and deintercalate lithium ions. Examples of the positive electrode active material include compounds represented by any of the following chemical formulas:

LiₐA_{1-b}X_{b}D₂(0.90 ≤ a ≤ 1.8, 0 ≤ b ≤ 0.5);

LiₐA_{1-b}X_{b}O_{2-c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}Co_{b}X_{c}Dₐ (0.90 ≤ a ≤ 1.8, 0 ≤ b ≤ 0.5, 0 ≤ c ≤ 0.5, 0 < a ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < a < 2);

LiₐNi_{1-b-c}Co_{b}X_{c}O₂₋ₐT₂ (0.90 ≤ a ≤ 1.8, 0 ≤ b ≤ 0.5, 0 ≤ c ≤ 0.05, 0 < α < 2);

LiₐNi_{1-b-c}Mn_{b}X_{c}Dₐ (0.90 ≤ a ≤ 1.8, 0 ≤ b ≤ 0.5, 0 ≤ c ≤ 0.05, 0 < α ≤ 2);

LiₐNi_{1-b-c}Mn_{b}X_{c}O₂₋ₐTₐ (0.90 ≤ a ≤ 1.8, 0 ≤ b ≤ 0.5, 0 ≤ c ≤ 0.05, 0 < a < 2);

LiₐNi_{1-b-c}Mn_{b}X_{c}O₂₋ₐT₂ (0.90 ≤ a ≤ 1.8, 0 ≤ b ≤ 0.5, 0 ≤ c ≤ 0.05, 0 < a < 2);

LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GeO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1);

LiₐNiG_{b}O₂(0.90 ≤ a ≤ 1.8, 0.001 ≤ b ≤ 0.1);

LiₐCoG_{b}O₂(0.90 ≤ a ≤ 1.8, 0.001 ≤ b ≤ 0.1);

LiₐMn_{1-b}G_{b}O₂(0.90 ≤ a ≤ 1.8, 0.001 ≤ b ≤ 0.1);

LiₐMn₂G_{b}O₄(0.90 ≤ a ≤ 1.8, 0.001 ≤ b ≤ 0.1);

LiₐMn_{1-g}GgPO₄(0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li_{(3-f)}J₂(PO₄)₃ (0 ≤ f ≤ 2);

Li_{(3-f)}Fe₂(PO₄)₃ (0 ≤ f ≤ 2);

LiₐFePO₄(0.90 ≤ a ≤ 1.8).

In the above chemical formulas, A is selected from Ni, Co, Mn, and a combination thereof; X is selected from Al, Ni, Co, Mn, Cr, Fe, Mg, Sr, V, rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The positive electrode active material may be a lithium-metal composite oxide, for example, lithium cobalt oxide (LCO), lithium nickel oxide (LNO), lithium nickel cobalt oxide (NC), lithium nickel cobalt aluminum oxide (NCA), and lithium nickel cobalt manganese oxide (NCM), lithium manganese oxide (LMO), or lithium iron phosphate (LFP).

The compound having a coating layer on the surface may be used, or a mixture of the above compound and a compound having a coating layer may be used. This coating layer may include at least one coating element compound selected from an oxide of the coating element, a hydroxide of the coating element, an oxyhydroxide of the coating element, an oxycarbonate of the coating element, and a hydroxycarbonate of the coating element. The compound forming the coating layer may be amorphous or crystalline. The coating element included in the coating layer may include Mg, Al, Co, K, Na, Ca, Si, Ti, V, Sn, Ge, Ga, B, As, Zr, or a combination thereof. As an example, the coating layer may include Li2O-ZrO₂ (LZO). The coating layer formation process may use a method that do not adversely affect the physical properties of the positive electrode active material, such as spray coating, dipping, and the like.

The positive electrode active material may include, for example, one or more types of lithium-metal composite oxides represented by Chemical Formula 11.

[Chemical Formula 11] LiₐM¹¹_{1-y11-z11}M¹²_{y11}M¹³_{z11}O₂

In Chemical Formula 11, 0.9≤a≤1.8, 0≤y11≤1, 0≤z11≤1, 0≤y11+z11<1, and M¹¹, and M¹² and M¹³ are independently any one selected from elements such as Ni, Co, Mn, Al, Mg, Ti, or Fe, and the like, and a combination thereof.

For example, M¹¹ may be Ni, and M¹² and M¹³ may independently be metals such as Co, Mn, Al, Mg, Ti, or Fe. In a specific embodiment, M¹¹ may be Ni, M¹² may be Co, and M¹³ may be Mn or Al, but are not limited thereto.

In an embodiment, the positive electrode active material may include a lithium nickel-based composite oxide represented by Chemical Formula 12.

[Chemical Formula 12] Liₐ₁₂Niₓ₁₂M¹⁴_{y12}M¹⁵_{1-x12-y12}O₂

In Chemical Formula 12, 0.9≤a12≤1.8, 0.3≤x12≤1, 0≤y12≤0.7, and M¹⁴ and M¹⁵ are independently at least one element selected from Al, B, Ba, Ca, Ce, Co, Cr, F, Fe, Mg, Mn, Mo, Nb, P, S, Si, Sr, Ti, V, W, and Zr.

In Chemical Formula 12, 0.3≤x12≤0.99 and 0.01≤y12≤0.7, 0.4≤x12≤0.99 and 0.01≤y12≤0.6, 0.5≤x12≤0.99 and 0.01≤y12≤0.5, 0.6≤x12≤0.99 and 0.01≤y12≤0.4, 0.7≤x12≤0.99 and 0.01≤y12≤0.3, 0.8≤x12≤0.99 and 0.01≤y12≤0.2, or 0.9≤x12≤0.99 and 0.01 ≤y12≤0.1.

For example, the positive electrode active material may include lithium nickel cobalt-based oxide represented by Chemical Formula 13.

[Chemical Formula 13] Liₐ₁₃Niₓ₁₃Co_{y13}M¹⁶_{1-x13-y13}O₂

In Chemical Formula 13, 0.9≤a13≤1.8, 0.3≤x13<1, 0<y13≤0.7 and M¹⁶ is at least one element selected from Al, B, Ba, Ca, Ce, Cr, F, Fe, Mg, Mn, Mo, Nb, P, S, Si, Sr, Ti, V, W, and Zr.

In Chemical Formula 13, 0.3≤x13≤0.99, and 0.01≤y13≤0.7, 0.4≤x13≤0.99 and 0.01≤y13≤0.6, 0.5≤x13≤0.99, and 0.01≤y13≤0.5, 0.6≤x13≤0.99 and 0.01≤y13≤0.4, 0.7≤x13≤0.99, and 0.01≤y13≤0.3, 0.8≤x13≤0.99 and 0.01≤y13≤0.2, or 0.9≤x13≤0.99, and 0.01 ≤y13≤0.1.

A nickel content in the lithium nickel-based composite oxide may be greater than or equal to 30 mol%, for example, greater than or equal to 40 mol%, greater than or equal to 50 mol%, greater than or equal to 60 mol%, greater than or equal to 70 mol%, greater than or equal to 80 mol%, or greater than or equal to 90 mol%, and may be less than or equal to 99.9 mol%, or less than or equal to 99 mol% based on a total amount of metals excluding lithium.

As an example, the lithium nickel-based composite oxide may be a high nickel-based oxide including greater than or equal to 80 mol%, or greater than or equal to 90 mol% of nickel, based on a total amount of metals excluding lithium. In this case, there is the advantage of realizing high capacity and high output characteristics, but there is a problem in that a large amount of gas is generated during battery operation. At this time, the generated gas is located at the interface between the electrode and the separator, causing precipitation of lithium salts, which may cause a rapid decrease in capacity or a short circuit and ignition. In order to solve this problem, when the separator according to an embodiment is applied, the heat resistance is improved and the adhesive force between the separator and the electrode is strengthened, thereby effectively suppressing the precipitation of lithium salts, thereby effectively improving the safety and cycle-life characteristics of the battery.

When combining a positive electrode using a high nickel-based positive electrode active material with a separator according to an embodiment, and applying a battery type that is difficult to apply a high temperature and high pressure process, effects of an embodiment, that is, the effect of improving the heat resistance, safety, processability, and cycle-life characteristics of the battery, can be maximized.

The average particle diameter (D50) of the positive electrode active material may be 1 µm to 25 µm, for example, 4 µm to 25 µm, 5 µm to 20 µm, 8 µm to 20 µm, or 10 µm to 18 µm. The positive electrode active material having a particle diameter within the ranges may be harmoniously mixed with the other components in the positive electrode active material layer and realize high capacity and high energy density. The average particle diameter may be may mean a diameter (D50) of particles measured by a particle size analyzer and having a cumulative volume of 50 volume% in the particle size distribution.

The positive electrode active material may be in a form of secondary particles formed through agglomeration of a plurality of primary particles or in a form of single particles. In addition, the positive electrode active material may have a spherical shape or a shape near to the spherical shape or a polyhedronal shape or an irregular shape.

The positive electrode active material may be included in an amount of 55 wt% to 99.7 wt%, for example 74 wt% to 89.8 wt% based on a total weight of the positive electrode active material layer. Within the above range, the capacity of the rechargeable lithium battery can be maximized and cycle-life characteristics can be improved.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

An amount of the binder in the positive electrode active material layer may be 1 wt% to 5 wt% based on the total weight of the positive electrode active material layer.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, carbon nanotube, and the like; a metal-based material of a metal powder or a metal fiber including copper, nickel, aluminum, silver, and the like; a conductive polymer such as a polyphenylene derivative; or a mixture thereof. An amount of the conductive material in the positive electrode active material layer may be 1 wt% to 5 wt% based on the total weight of the positive electrode active material layer.

### Negative Electrode

A negative electrode for a rechargeable lithium battery includes a current collector and a negative electrode active material layer located on the current collector. The negative electrode active material layer includes a negative electrode active material and may further include a binder and/or a conductive material.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be non-shaped, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x<2), a Si-Q alloy (wherein Q is an alkali metal, an alkaline-earth metal, a Group 13 element, a Group 14 element, a Group 15 element, a Group 16 element, a transition metal, a rare earth element, and a combination thereof, but not Si) and the Sn-based negative electrode active material may include Sn, SnO₂, a Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be 10 wt% to 50 wt% based on the total weight of the silicon-carbon composite. In addition, the content of the crystalline carbon may be 10 wt% to 70 wt% based on the total weight of the silicon-carbon composite, and the content of the amorphous carbon may be 20 wt% to 40 wt% based on the total weight of the silicon-carbon composite. In addition, a thickness of the amorphous carbon coating layer may be 5 nm to 100 nm. An average particle diameter (D50) of the silicon particles may be 10 nm to 20 µm. The average particle diameter (D50) of the silicon particles may be preferably 10 nm to 200 nm. The silicon particles may exist in an oxidized form, and in this case, an atomic content ratio of Si:O in the silicon particles indicating a degree of oxidation may be 99:1 to 33:67. The silicon particles may be SiOₓ particles, and in this case, the range of x in SiOₓ may be greater than 0 and less than 2.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of 1:99 to 90:10.

In the negative electrode active material layer, the negative electrode active material may be included in an amount of 95 wt% to 99 wt% based on the total weight of the negative electrode active material layer.

In an embodiment, the negative electrode active material layer further includes a binder and, optionally, may further include a conductive material. An amount of the binder in the negative electrode active material layer may be 1 wt% to 5 wt% based on a total weight of the negative electrode active material layer. In addition, when a conductive material is further included, the negative electrode active material layer may include 90 wt% to 98 wt% of the negative electrode active material, 1 wt% to 5 wt% of the binder, and 1 wt% to 5 wt% of the conductive material.

The binder serves to well adhere the negative electrode active material particles to each other and also to adhere the negative electrode active material to the current collector. The binder may be a water-insoluble binder, a water-soluble binder, or a combination thereof.

The water-insoluble binder may include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li. The amount of such a thickener used may be 0.1 parts by weight to 3 parts by weight based on 100 parts by weight of the negative electrode active material.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, carbon nanotube, and the like; a metal-based material of a metal powder or a metal fiber including copper, nickel, aluminum, silver, and the like; a conductive polymer such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal, and a combination thereof.

### Electrolyte

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and the like.

The non-aqueous organic solvent may be used alone or in a mixture, and when the organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte solution may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

As the aromatic hydrocarbon-based solvent, an aromatic hydrocarbon-based compound represented by Chemical Formula I may be used.

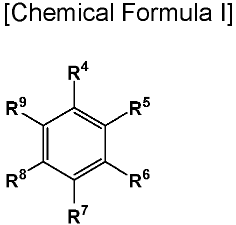

In Chemical Formula I, R⁴ to R⁹ are the same or different and are selected from hydrogen, a halogen, a C1 to C10 alkyl group, a C1 to C10 haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte solution may further include vinylene carbonate or an ethylene carbonate-based compound of Chemical Formula II in order to improve cycle-life of a battery.

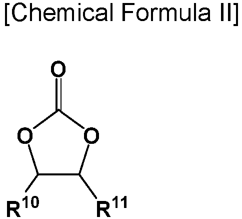

In Chemical Formula II, R¹⁰ and R¹¹ are the same or different, and are selected from hydrogen, a halogen, a cyano group, a nitro group, and a fluorinated C1 to C5 alkyl group, provided that at least one of R¹⁰ and R¹¹ is selected from a halogen, a cyano group, a nitro group, and a fluorinated C1 to C5 alkyl group, but both of R¹⁰ and R¹¹ are not hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide; LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxalato) phosphate, LiCl, Lil, LiB(C₂O₄)₂ (lithium bis(oxalato) borate; LiBOB), and lithium difluoro(oxalato)borate (LiDFOB).

The lithium salt may be used in a concentration ranging from 0.1 M to 2.0 M. If the lithium salt is included at the above concentration range, an electrolyte may have excellent performance and lithium ion mobility due to optimal electrolyte conductivity and viscosity.

Rechargeable lithium batteries may be classified as lithium ion batteries, lithium ion polymer batteries, and lithium polymer batteries according to the presence of a separator and the kind of electrolyte used in the battery. The rechargeable lithium batteries may have a variety of shapes and sizes, and include cylindrical, prismatic, coin, or pouch-type batteries, and may be thin film batteries or may be rather bulky in size. Structures and manufacturing methods for lithium ion batteries pertaining to this disclosure are well known in the art.

The rechargeable lithium battery according to an embodiment may be used in an electric vehicle (EV), a hybrid electric vehicle such as a plug-in hybrid electric vehicle (PHEV), and portable electronic device because it implements a high capacity and has excellent storage stability, cycle-life characteristics, and high rate characteristics at high temperatures.

### [Mode for Invention]

Hereinafter, examples of the present invention and comparative examples are described. It is to be understood, however, that the examples are for the purpose of illustration and are not to be construed as limiting the present invention.

### Example 1

### 1. Manufacturing of Separator

### (1) Preparation of First Binder of Heat Resistant Layer

Distilled water (6361 g), acrylic acid (72.06 g, 1.0 mol), acrylamide (604.1 g, 8.5 mol), potassium persulfate (2.7 g, 0.01 mol), 2-acrylamido-2-methylpropanesulfonic acid (103.6 g, 0.5 mol), and a 5 N lithium hydroxide aqueous solution (1.05 equivalent based on a total amount of the 2-acrylamido-2-methylpropane sulfonic acid) are put in a 10 L four-necked flask equipped with a stirrer, a thermometer, and a condenser, and an internal pressure of the flask is reduced to 10 mmHg with a diaphragm pump and then, recovered to a normal pressure with nitrogen, which is three times repeated. The reaction solution is controlled to be stable between 65 °C to 70 °C for 12 hours. The reaction solution is cooled down to room temperature and adjusted to have pH in a range of 7 to 8 by using a 25% ammonia aqueous solution. In this way, poly(acrylamide-co-2-acrylamido-2-methylpropanesulfonic acid-co-acrylic acid)sodium salt is prepared in a molar ratio of acrylamide, 2-acrylamido-2-methylpropanesulfonic acid, and acrylic acid of 85:5:10 to prepare the first binder.

### (2) Formation of Heat Resistant Layer

A heat resistant layer composition is prepared by mixing the prepared first binder and inorganic particles (boehmite, D50=0.3 µm) at a weight ratio of 1:30 in a water solvent. The prepared heat resistant layer composition is coated on both surfaces of an 8 µm-thick polyethylene porous substrate (SK Company, air permeability: 120 sec/100cc, puncture strength: 480 kgf) by bar coating to a thickness of 1.5 µm per surface and dried.

### (3) Formation of Adhesive Layer

A second binder with a core-shell structure, an average particle diameter (D50) of 0.5 µm, a glass transition temperature of 65 °C, and a swelling degree of 800% is prepared. In the second binder, the core includes a copolymer of alkyl acrylate and divinylbenzene, and the shell includes a copolymer of 70 wt% of styrene, 20 wt% of 2-ethylhexyl methacrylate, and 10 wt% of acryl phosphate. An adhesive layer composition is prepared by dispersing the second binder in a water solvent. The adhesive layer composition is coated on the surface of the heat resistant layer using a bar coating method to have a thickness of 0.5 µm per surface and dried, and a loading amount of the adhesive layer composition is set to 0.1 g/m².

Thereby, a coated separator with a total thickness of approximately 12 µm is manufactured.

### 2. Manufacturing of Battery Cell

96 wt% of a LiNi_{0.91}Co_{0.05}Al_{0.04}O₂ positive electrode active material, 2 wt% of a polyvinylidene fluoride binder, 2 wt% of a carbon nanotube conductive material, and an N-methylpyrrolidone solvent are mixed with a mixer to prepare a positive electrode active material layer composition, and this positive electrode active material layer composition is coated on an aluminum foil and then, dried and roll-pressed, manufacturing a positive electrode.

97 wt% of graphite, 1.5 wt% of a styrene butadiene rubber binder, 1.5 wt% of carboxylmethyl cellulose, and a distilled water solvent are mixed to prepare a negative electrode active material layer composition, and the negative electrode active material layer composition is coated on a copper current collector and then, dried and compressed, manufacturing a negative electrode.

A coin cell is manufactured by interposing the prepared coated separator between the positive electrode and the negative electrode, inserting it into a case, and then injecting an electrolyte solution. The electrolyte solution is a solution of 1.1M LiPF₆ dissolved in a solvent mixed with ethylene carbonate (EC) and ethylmethyl carbonate (EMC) in a volume ratio of 3:5.

### Example 2

A separator and a battery cell are manufactured in the same manner as in Example 1, except that a loading amount of the adhesive layer composition when forming the adhesive layer is set to 0.15 g/m².

### Example 3

A separator and a battery cell are manufactured in the same manner as in Example 1, except that a loading amount of the adhesive layer composition when forming the adhesive layer is set to 0.20 g/m².

### Example 4

A separator and a battery cell are manufactured in the same manner as in Example 1 except that a binder having a core-shell structure in which the shell is made of a styrene-co-2-ethylhexylmethacrylate-co-acrylphosphate copolymer, an average particle diameter (D50) of 0.5 µm, a glass transition temperature of 75 °C and a swelling degree of 800% is used as the second binder of the adhesive layer.

### Example 5

A separator and a battery cell are manufactured in the same manner as in Example 4, except that a loading amount of the adhesive layer composition when forming the adhesive layer is set to 0.15 g/m².

### Example 6

A separator and a battery cell are manufactured in the same manner as in Example 4, except that a loading amount of the adhesive layer composition when forming the adhesive layer is set to 0.15 g/m².

### Comparative Example 1

A separator and battery cell are manufactured in the same manner as Example 3, except that polyvinylidene fluoride (PVdF) is used as the second binder of the adhesive layer.

### Comparative Example 2

A separator and a battery cell are manufactured in the same manner as in Example 3 except that a binder having a core-shell structure in which the shell is made of a styrene-co-2-ethylhexylmethacrylate-co-acrylonitrile copolymer, and having a glass transition temperature of 65 °C and a swelling degree of 800% is used as the second binder of the adhesive layer.

### Comparative Example 3

A separator and a battery cell are manufactured in the same manner as in Example 3 except that a binder having a core-shell structure in which the shell is made of a styrene-co-butylacrylate-co-acrylonitrile copolymer, and having a glass transition temperature of 55 °C and a swelling degree of 400% is used as the second binder of the adhesive layer.

### Comparative Example 4

A separator and a battery cell are manufactured in the same manner as in Example 3 except that a binder having a core-shell structure in which the shell is made of a styrene-co-2-ethylhexylmethacrylate-co-acrylonitrile copolymer, and having a glass transition temperature of 60 °C and a swelling degree of 300% is used as the second binder of the adhesive layer.

### Evaluation Example 1: Evaluation of Dry Shrinkage Rate of Separator

The coated separators prepared in Examples and Comparative Examples are cut to a size of (8 cm) x (8 cm) and placed in a convection oven at 150 °C for 1 hour, and then the length change rates in the longitudinal direction (MD) and transverse direction (TD) of the coated separator are calculated. The results are shown in Table 1.

Referring to Table 1, the separators of Examples 1 to 6 show a very low shrinkage rates of 2.3% or less at high temperatures, demonstrating excellent heat resistance.

### Evaluation Example 2: Evaluation of Wet Adhesive Force of Separator

The battery cells manufactured in Examples and Comparative Examples are maintained at a temperature of 40 °C and a load of 50 kg for 2 hours, and then subjected to a peeling test as follows. After separating the separator and the positive electrode by about 15 mm and then, fixing the positive electrode to a lower grip and the separator to an upper grip, the two grips are pulled apart in the 180 ° direction to peel the positive electrode and the separator at 100 mm/min. The force required to peel 40 mm is measured three times and the arithmetic average is obtained. The peeling test for the separator and negative electrode is also performed in the same way, and the results are shown in Table 1.

Referring to Table 1, in Comparative Examples 1 to 4, the peel strength between the separator and the negative electrode is at the level of 0.05 gf/mm, which is very low, while the adhesive strength is very low while in Examples 1 to 5, it can be seen that the peel strength between the separator and the cathode and the peel strength between the separator and the anode are all very high at 0.1 gf/mm or more, demonstrating excellent adhesive force.

### Evaluation Example 3: Evaluation of High-temperature Cycle-life Characteristics of Battery Cells

The battery cells of Examples and Comparative Examples are charged to an upper limit voltage of 4.25 V at 55 °C at a constant current of 0.1 C, and then discharged at a constant current of 0.1 C until the cut-off discharge voltage is 3.5 V to perform initial charging and discharging. Then, charging at 0.5 C and discharging at 0.5 C are repeated 10 times in a voltage range of 3.5 V to 4.25 V. The battery temperature is measured after 10 cycles, and a degree of increase compared to the initial temperature is measured and shown in Table 1. Additionally, the ratio of the discharge capacity in the 10th cycle to the initial discharge capacity is calculated and shown as efficiency in Table 1.

Referring to Table 1, for the battery cells of Comparative Examples 1 to 4, the temperature change is as large as 12 °C or more, whereas for the battery cells of Examples 1 to 6, the temperature change is as low as 7.5 °C or less, confirming that heat generation during battery operation is suppressed. In addition, in the case of the battery cells of Comparative Examples 1 to 4, the capacity retention rate at 10 cycles is 84% or less, while in the case of the battery cells of Examples 1 to 6, the capacity retention rate is as high as 94% or more, indicating that high-temperature cycle-life characteristics are improved.

**(Table 1)**

| | Dry shrinkage rate of separator | | Wet adhesive force of separator | | High temperature cycle-life characteristics of battery cell | |
|---|---|---|---|---|---|---|
| | MD (%) | TD (%) | Positive electrode (gf/mm) | Negative electrode (gf/mm) | Temperature change (°C) | Efficiency (%) |
| Example1 | 2.1 | 1.5 | 0.21 | 0.18 | 6.5 | 95 |
| Example2 | 2.0 | 1.6 | 0.35 | 0.23 | 4.2 | 97 |
| Example3 | 2.2 | 1.3 | 0.40 | 0.31 | 3.9 | 98 |
| Example4 | 2.1 | 1.8 | 0.25 | 0.15 | 7.5 | 94 |
| Example5 | 2.3 | 1.5 | 0.26 | 0.18 | 6.0 | 96 |
| Example6 | 2.3 | 1.5 | 0.32 | 0.25 | 4.3 | 98 |
| Comparative Example1 | 2.0 | 1.2 | 0.28 | 0.01 | 16.0 | 81 |
| Comparative Example2 | 2.4 | 1.8 | 0.20 | 0.05 | 12.0 | 83 |
| Comparative Example3 | 2.2 | 1.5 | 0.15 | 0.03 | 14.0 | 83 |
| Comparative Example4 | 2.1 | 1.6 | 0.18 | 0.02 | 15.0 | 84 |

### Evaluation Example 4: Evaluation of Heat Generation during Cycle of Battery Cell

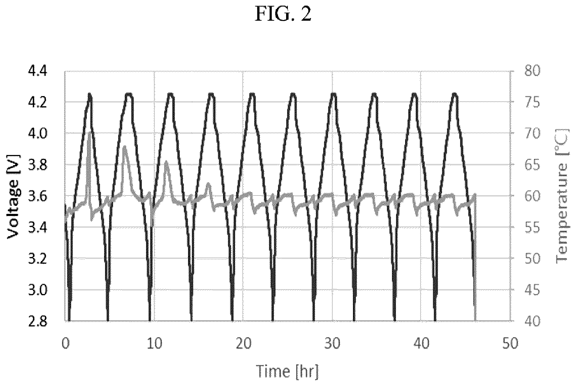

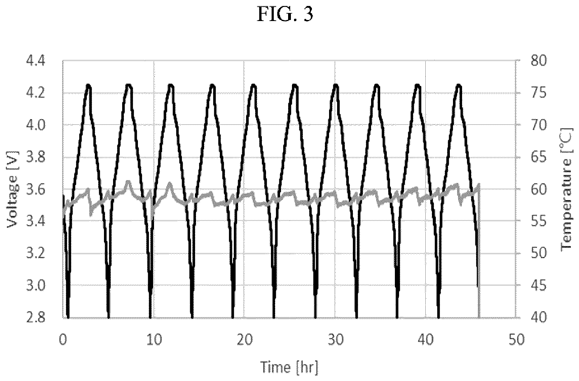

The battery cells of Comparative Example 1 and Example 1 are cycled in the same manner as in Evaluation Example 3, the temperatures inside the battery cells is measured, and the results are shown in FIGS. 2 and 3. FIG. 2 is the result of Comparative Example 1 and FIG. 3 is the result of Example 1.

Referring to the gray graph showing temperature in FIG. 2, the temperature inside the battery cell exceeds 65 °C during the initial operation of the battery cell, indicating a heat generation phenomenon. Referring to FIG.3, the battery cell does not overheat during operation.

### Evaluation Example 5: Evaluation of Initial Charge/discharge Efficiency

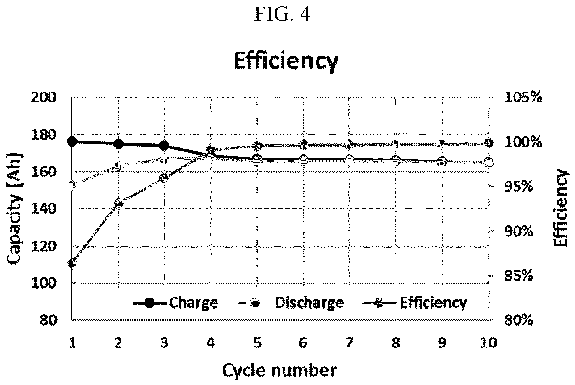

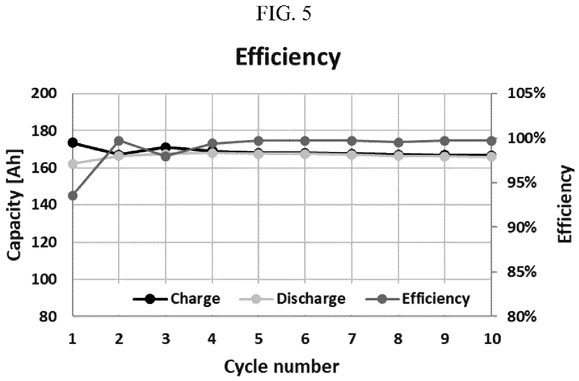

The battery cells of Comparative Example 1 and Example 1 are charged to the upper limit voltage of 4.25 V at a constant current of 0.1 C at room temperature (25 °C), and then discharged at a constant current of 0.1 C until the discharge cut-off voltage is 3.5 V to perform initial charging and discharging. Then, charging at 0.5 C and discharging at 0.5 C are repeated 10 times in a voltage range of 3.5 V to 4.25 V. Charge capacity, discharge capacity, and efficiency, which is a ratio of discharge capacity to charge capacity, are measured for 10 cycles, and the results are shown in FIGS. 4 and 5. FIG. 4 shows the results of Comparative Example 1, and FIG. 5 shows the results of Example 1.

Referring to FIG. 4, in the case of the battery cell of Comparative Example 1, the initial charge and discharge efficiency is reduced. On the other hand, referring to FIG. 5, the initial charge and discharge efficiency of the battery cell of Example 1 is improved compared to Comparative Example 1.

Although the preferred embodiments have been described in detail above, the scope of the present invention is not limited thereto. In addition, various modifications and improvements made by those skilled in the art using the basic concept defined in the claims should also be understood as falling within the scope of the present invention.

**[Description of Symbols]**

| | | | |
|---|---|---|---|
| 100: | rechargeable lithium battery | 112: | negative electrode |
| 113: | separator | 114: | positive electrode |
| 120: | battery case | 140: | sealing member |

## Claims

1. A separator for a rechargeable lithium battery, comprising
a porous substrate,
a heat resistant layer on at least one surface of the porous substrate, and
an adhesive layer on the heat resistant layer,
wherein the heat resistant layer includes a first binder and inorganic particles,
the first binder includes at least one selected from polyacrylate, polyacrylic acid, polyacrylonitrile, polyvinyl alcohol, polysulfonic acid, polyacrylamide, polyamide, polyurea, polyurethane, and a copolymer thereof,
the adhesive layer includes a second binder, and
the second binder includes a copolymer including a first unit derived from a vinyl aromatic monomer, a second unit derived from an alkyl acrylate, and a third unit derived from a phosphonate-based monomer.

2. The separator for a rechargeable lithium battery as claimed in claim 1, wherein
in the heat resistant layer, the first binder includes a copolymer including a first unit derived from (meth)acrylamide, a second unit derived from a sulfonic acid group-containing monomer, and a third unit derived from (meth)acrylic acid, (meth)acrylate, a nitrile group-containing monomer, and an alcohol group-containing monomer, or a combination thereof.

3. The separator for a rechargeable lithium battery as claimed in claim 2, wherein
in the first binder of the heat resistant layer, the copolymer includes 55 mol% to 99 mol% of the first unit, 0.5 mol% to 40 mol% of the second unit, and 0.5 mol% to 40 mol% of the third unit.

4. The separator for a rechargeable lithium battery as claimed in claim 3, wherein
in the first binder of the heat resistant layer, the copolymer includes 75 mol% to 94 mol% of the first unit, 1 mol% to 10 mol% of the second unit, and 5 mol% to 15 mol% of the third unit.

5. The separator for a rechargeable lithium battery as claimed in claim 1, wherein
In the heat resistant layer, a weight ratio of the first binder and the inorganic particles is 1:20 to 1:40.

6. The separator for a rechargeable lithium battery as claimed in claim 1, wherein
an average particle diameter (D50) of the inorganic particles is 0.1 µ m to 2 µ m.

7. The separator for a rechargeable lithium battery as claimed in claim 1, wherein
a thickness of the heat resistant layer is 0.1 µ m to 5 µ m.

8. The separator for a rechargeable lithium battery as claimed in claim 1, wherein
the first unit in the second binder of the adhesive layer is represented by Chemical Formula 1: 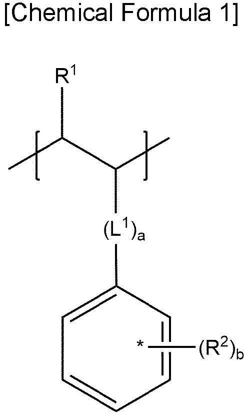
wherein, in Chemical Formula 1, R¹ is hydrogen, a fluorine, a substituted or unsubstituted C1 to C6 alkyl group, or a substituted or unsubstituted C6 to C20 aryl group, L¹ is a substituted or unsubstituted C1 to C6 alkylene group, a substituted or unsubstituted C3 to C10 cycloalkylene group, a substituted or unsubstituted C6 to C20 arylene group, or a combination thereof, a is 0 or 1, * indicates a portion linked to the carbon of the benzene ring, R² is fluorine, a substituted or unsubstituted C1 to C6 alkyl group, a substituted or unsubstituted C6 to C20 aryl group, or a substituted or unsubstituted C1 to C6 alkenyl group, and b is an integer of 0 to 5.

9. The separator for a rechargeable lithium battery as claimed in claim 1, wherein
in the first unit of the second binder of the adhesive layer, the vinyl aromatic monomer is styrene, α -methylstyrene, fluorostyrene, vinyltoluene, divinylbenzene, 1,1-diphenylethylene, or a combination thereof.

10. The separator for a rechargeable lithium battery as claimed in claim 1, wherein
in the second binder of the adhesive layer, the second unit is represented by Chemical Formula 2: 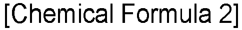 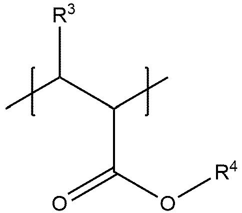
wherein, in Chemical Formula 2, R³ is hydrogen, fluorine, a substituted or unsubstituted C1 to C6 alkyl group, or a substituted or unsubstituted C6 to C20 aryl group, and R⁴ is a C1 to C20 alkyl group.

11. The separator for a rechargeable lithium battery as claimed in claim 1, wherein
in the second binder of the adhesive layer, the third unit is represented by Chemical Formula 3: 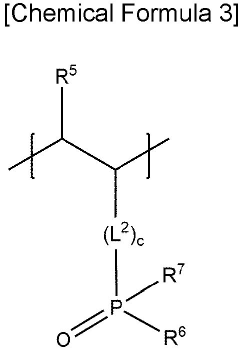
wherein, in Chemical Formula 3, R⁵ is hydrogen, fluorine, a substituted or unsubstituted C1 to C6 alkyl group, or a substituted or unsubstituted C6 to C20 aryl group, L² is a carboxyl group (-C(=O)O-), a carbonyl group (-C(=O)-), an ether group (-O-), a substituted or unsubstituted C1 to C6 alkylene group, a substituted or unsubstituted C3 to C10 cycloalkylene group, a substituted or unsubstituted C6 to C20 arylene group, or a combination thereof, c is 0 or 1, and R⁶ and R⁷ are the same or different from each other and are each independently a substituted or unsubstituted C1 to C10 alkyl group, or a substituted or unsubstituted C6 to C20 aryl group.

12. The separator for a rechargeable lithium battery as claimed in claim 1, wherein
in the third unit of the second binder of the adhesive layer, the phosphonate-based monomer is acryl phosphonate.

13. The separator for a rechargeable lithium battery as claimed in claim 1, wherein
in the second binder of the adhesive layer, the copolymer includes 40 wt% to 80 wt% of the first unit, 5 wt% to 40 wt% of the second unit, and 0.1 wt% to 20 wt% of the third unit.

14. The separator for a rechargeable lithium battery as claimed in claim 1, wherein
the second binder of the adhesive layer is in a form of particles and has an average particle diameter (D50) of 0.1 µm to 1 µm.

15. The separator for a rechargeable lithium battery as claimed in claim 1, wherein
the second binder of the adhesive layer is in a form of particles with a core-shell structure, and the shell includes a copolymer including a first unit derived from a vinyl aromatic monomer, a second unit derived from an alkyl acrylate, and a third unit derived from a phosphonate-based monomer.

16. The separator for a rechargeable lithium battery as claimed in claim 1, wherein
a glass transition temperature of the second binder of the adhesive layer is 60 °C to 90 °C.

17. The separator for a rechargeable lithium battery as claimed in claim 1, wherein
a swelling degree of the second binder of the adhesive layer is 600% to 1000%, and the swelling degree represents a swelling degree after leaving the second binder in an electrolyte solution at 60 °C for 72 hours.

18. The separator for a rechargeable lithium battery as claimed in claim 1, wherein
a thickness of the adhesive layer is 0.05 µm to 3 µm.

19. The separator for a rechargeable lithium battery as claimed in claim 1, wherein
the heat resistant layer and the adhesive layer are located on both surfaces of the porous substrate, and an amount of the second binder in the adhesive layer on the negative electrode side in contact with the negative electrode is greater than or equal to an amount of the second binder in the adhesive layer on the positive electrode side in contact with the positive electrode.

20. A rechargeable lithium battery, comprising
a positive electrode,
a negative electrode, and
the separator as claimed in any one of claim 1 to claim 19 between the positive electrode and the negative electrode, and
an electrolyte.

21. The rechargeable lithium battery as claimed in claim 20, wherein
the positive electrode includes a positive electrode active material including a lithium nickel-based composite oxide, and a nickel content ratio of the lithium nickel-based composite oxide to the total content of metals excluding lithium is greater than or equal to 90 mol%.
